(19) Europäisches Patentamt
European Patent Office
Office européen des brevets

(11) **EP 1 790 508 B1**

(12) **EUROPÄISCHE PATENTSCHRIFT**

(45) Veröffentlichungstag und Bekanntmachung des Hinweises auf die Patenterteilung:
**11.11.2009   Patentblatt 2009/46**

(51) Int Cl.:
***B60H 1/00*** *(2006.01)*

(21) Anmeldenummer: **06124842.3**

(22) Anmeldetag: **27.11.2006**

(54) **Verfahren zur Ermittlung eines Istwertes für eine Innenraumtemperaturregelung bei einem Fahrzeug mit geöffnetem Verdeck oder Schiebedach**

Method for determining an actual value for a temperature control of a vehicle having an opened roof

Procédé de détermination d'une valeur réelle pour le contrôle de la température de l'habitacle d'une voiture décapotée ou avec le toit ouvert

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.11.2005   DE 102005056407**

(43) Veröffentlichungstag der Anmeldung:
**30.05.2007   Patentblatt 2007/22**

(73) Patentinhaber:
- **Behr-Hella Thermocontrol GmbH**
  **70190 Stuttgart (DE)**
- **Volkswagen AG**
  **38440 Wolfsburg (DE)**

(72) Erfinder: **Kemmerling, Jörg**
  **59556 Lippstadt (DE)**

(74) Vertreter: **von Kreisler Selting Werner**
  **Patentanwälte**
  **Deichmannhaus am Dom**
  **Bahnhofsvorplatz 1**
  **50667 Köln (DE)**

(56) Entgegenhaltungen:
  **EP-A2- 0 130 528      DE-A1- 10 342 986**
  **DE-A1- 10 342 987**

EP 1 790 508 B1

**Beschreibung**

Die Erfindung betrifft ein Verfahren zur Ermittlung eines Temperaturwertes bei einem mit einer Klimaanlage mit einem Außentemperaturfühler und einem Temperaturfühler für den Innenraum ausgestatteten, als Cabrio ausgebildeten und/oder mit einem Schiebedach oder dergleichen Fahrzeugöffnung versehenen Fahrzeug als Istwert für eine Innenraumtemperaturregelung der Klimaanlage bei geöffnetem Verdeck oder Schiebedach oder dergleichen Öffnung des Fahrzeuges.

Mit manuell oder automatisch betriebenen Klimaanlagen ausgestattete Fahrzeuge erfreuen sich zunehmender Beliebtheit, und zwar unter anderem auch deshalb, weil die Gefahr der Ermüdung des Fahrers dann, wenn er sich in einer wohl klimatisierten Umgebung bei z.B. Raumtemperatur, d.h. in einem entsprechend klimatisierten Fahrzeuginnenraum befindet, verringert ist. Bekannte Klimaanlagen arbeiten grundsätzlich zufriedenstellend, sind aber in erster Linie für Fahrzeuge mit Fahrgastzellen ausgelegt, die über ein in die Karosserie integriertes, feststehendes Dach verfügen.

Beim Einbau einer Klimaanlage in ein Fahrzeug mit abnehmbarem Verdeck oder auch Schiebedach bzw. anderen während der Fahrt dauerhaft geöffneten relativ großflächigen Öffnungen zeigt sich allerdings, dass der von einem dem Innenraum des Fahrzeuges zugeordneten Innenraumtemperaturfühler gemessene Temperaturwert für die bei geöffnetem Verdeck oder dergleichen Öffnung im Innenraum gegebene Temperatur nicht repräsentativ ist.

Es ist bekannt, eine Kfz-Klimaanlage in Abhängigkeit von dem Öffnungs- oder Schließzustand einer Fahrzeugöffnung wie beispielsweise einem abnehmbaren Verdeck, einer Dachöffnung oder einer Fensteröffnung unterschiedlich zu betreiben. Beispiele hierfür finden sich in DE 38 43 898 C1, DE 41 05 143 C1, DE 102 35 580 A1, DE 102 57 587 B3, DE 103 42 987 A1, EP 0 375 871 B1, EP 0 857 593 B1 und WO 2004/052668 A1.

In der Praxis hat sich gezeigt, dass die bekannten Klimaanlagen beispielsweise im Falle eines als Cabrio ausgebildeten Fahrzeuges bei geöffnetem Dach und extremen Witterungsbedingungen (sehr hohe bzw. relativ niedrige Außentemperaturen) nicht zufriedenstellend arbeiten.

Aufgabe der Erfindung ist es daher, ein Verfahren anzugeben, mit dem es möglich ist, eine für eine geschlossene Fahrgastzelle ausgelegte Kfz-Klimaanlage auch dann zu Erzielung einer den Fahrer und die Fahrgäste zufriedenstellenden Klimatisierung betreiben zu können, wenn das Verdeck bzw. das Schiebedach oder eine andere Fahrzeugöffnung zum Innenraum des Fahrzeuges offen ist.

Zur Lösung dieser Aufgabe wird mit der Erfindung ein Verfahren zur Ermittlung eines Temperaturwertes bei einem mit einer Klimaanlage mit einem Außentemperaturfühler und einem Temperaturfühler für den Innenraum ausgestatteten, als Cabrio ausgebildeten und/oder mit einem Schiebedach oder einer anderen verschließbaren Innenraumöffnung versehenen Fahrzeug als Istwert für eine Innenraumtemperaturregelung der Klimaanlage bei geöffnetem Verdeck oder Schiebedach oder einer anderen Fahrzeuginnenraumöffnung vorgeschlagen, wobei bei dem Verfahren

- der Messwert des Außentemperaturfühlers und der Messwert des dem Innenraum zugeordneten Temperaturfühlers kombiniert werden, wobei
- die Wichtung des Messwertes des Außentemperaturfühlers um so stärker und die Wichtung des Messwertes des dem Innenraum zugeordneten Temperaturfühlers um so geringer ist, je höher die Außentemperatur ist, und
- die Wichtung des Messwertes des Außentemperaturfühlers um so geringer und die Wichtung des Messwertes des dem Innenraum zugeordneten Temperaturfühlers um so stärker ist, je niedriger die Außentemperatur ist.

Klimaanlagen werden herkömmlicherweise insbesondere anhand der drei Parameter Außentemperatur, Innentemperatur-Sallwert und Sonneneinstrahlung betrieben. Von den beiden die Umgebungsbedingungen repräsentierenden Parametern Außentemperatur und Sonneneinstrahlung wirkt sich vor allem die Außentemperatur spürbar auf den Betrieb der Klimaanlage aus, wenn eine der oben beschriebenen Öffnungen während einer Fahrt dauerhaft geöffnet ist. Die Erfindung wird nachfolgend anhand eines Cabrios als Repräsentant für ein Fahrzeug mit Innenraumöffnung beschrieben.

Mit der Erfindung wird eine spezielle Art und Weise der Ermittlung eines Temperaturwertes als Istwert für die Fahrzeug-Innenraumtemperaturregelung vorgeschlagen, wenn die Innenraumöffnung des Fahrzeuges, also das Verdeck des Cabrios, offen ist. Erfindungsgemäß gehen in diese Isttemperatur-Ermittlung die Messwerte des Außentemperaturfühlers und des dem Innenraum zugeordneten Temperaturfühlers (nachfolgend Innenraumtemperaturfühler genannt) ein. Dabei ist die Wichtung, mit der die Messwerte dieser beiden Fühler gewichtet und kombiniert werden, in Abhängigkeit von der Außentemperatur unterschiedlich. Erfindungsgemäß wird dabei derart vorgegangen, dass, je höher die Außentemperatur ist, der Messwert des Innenraumtemperaturfiöhlers umso geringer gewichtet in den Kombinationsmesswert eingeht. Dies hängt damit zusammen, dass bei hohen Außentemperaturen, d.h. beispielsweise im Sommer, die Fahrzeuginsassen sie anströmende Kühlluft erwarten. Der Innenraumtemperaturfühler könnte gerade bei diesen Witterungsbedingungen einen Messwert liefern, der nicht repräsentativ für die Temperatur ist, denen die Fahrzeuginsassen, insbesondere im Kopfbereich, ausgesetzt sind. Mit anderen Worten wird also bei hohen Außentemperaturen der Istwert für die Innenraumtemperaturregelung im starken Maße von dem Messwert des Außentemperaturfühlers bestimmt.

Der Einfluss des Messwertes des Innenraumtemperaturfühlers ist hingegen gering. In gewisser Weise anders ist die Situation bei niedrigen Außentemperaturen, wie diese beispielsweise in den Übergangsmonaten vom Herbst zum Winter und vom Winter zum Frühling anzutreffen sind, bei denen die Insassen eines Cabrios aber nichtsdestotrotz mit offenem Verdeck fahren wollen. Auch während dieser Witterungsbedingungen sind die Fahrgäste insbesondere im oberen Körperbereich den geringen Außentemperaturen ausgesetzt. Würde man aber nun diese geringe Außentemperatur mit großem Einfluss in den Istwert für die Innenraumtemperaturregelung eingehen lassen, so würde über die Fußraumöffnungen relativ warme bzw. heiße Luft in den Fahrgastraum eingeblasen werden. Die Klimaanlage arbeitet nämlich bei niedrigen Außentemperaturen im Heizmodus, in dem Warmluft unten in den Fahrgastraum eingelassen wird. Bei alleiniger Berücksichtung der Außentemperatur besteht also die Gefahr, dass die in den Fußraum eingeblasene Luft zu heiß ist und demzufolge als unangenehm empfunden wird. Daher wird erfindungsgemäß bei niedrigeren Temperaturen der Messwert des Innenraumtemperaturfühlers stärker gewichtet als bei hohen Außentemperaturen bzw. der Messwert des Außentemperaturfühlers geringer gewichtet als der Messwert des Innenraumtemperaturfühlers.

Erfindungsgemäß wird also der Innenraumtemperatur-Istwert für die Innenraumtemperaturregelung nach folgender allgemeiner Rechenvarschrift ermittelt:

$$T_{IST} = T_{AUSSEN} \times k + T_{INNEN} (1 - k)$$

wobei $T_{IST}$ der Istwert für die Innenraumtemperaturregelung, $T_{AUSSEN}$ der Messwert des Außentemperatursensors, $T_{INNEN}$ der Messwert des Innenraumtemperaturfühlers und k ein Wichtungskoeffizient ist, der einen Wert zwischen 0 und 1 annimmt.

Für den Wichtungskoeffizienten k gilt:

$$k = f (T_{AUSSEN}),$$

der Wichtungskoeffizient ist also eine Funktion der Außentemperatur.

Wie bereits oben erwähnt, wirkt sich neben der Außentemperatur auch die Sonneneinstrahlung auf das Klima im Innenraum eines Fahrzeuges aus. Dabei sind die Einflüsse der Sonneneinstrahlung bei geschlossenem und geöffnetem Verdeck des Fahrzeuges unterschiedlich. So wirkt sich Sonneneinstrahlung bei geöffnetem Verdeck wesentlich stärker und schneller auf die Fahrzeuginsassen aus als bei geschlossenem Verdeck. Diesem Umstand wird bei einer vorteilhaften Weiterbildung der Erfindung dadurch Rechnung getragen, dass die Wichtung des Messwertes des Außentemperaturfühlers gegenüber der Wichtung des Messwertes des dem Innenraum zugeordneten Temperaturfühlers bei gleicher Außentemperatur um so größer ist, je höher die ermittelte Sonnenstrahlungsintensität ist.

Bei diesem Ausführungsbeispiel der Erfindung ergibt sich der Wichtungskoeffizient also als

$$k = f (T_{AUSSEN}, I_S),$$

wobei $I_S$ die Intensität der Sonneneinstrahlung ist. Die Intensität wird gewöhnlich über einen Sonnensensor ermittelt. Unter Zuhilfenahme des Messwerts des Außentemperatursensors kann die Auswirkung der gemessenen Sonnenintensität auf die Fahrgäste noch zusätzlich bewertet werden, indem nämlich anhand der Außentemperatur zwischen kalter und warmer Jahreszeit unterschieden werden kann.

Das erfindungsgemäße Verfahren lässt sich problemlos in eine bestehende Klimaanlage implementieren, indem die Klimasteuerung das Signal eines den Zustand des Verdecks eines Cabrios anzeigenden Sensors empfängt. In Abhängigkeit von dem Signal dieses Sensors kann die Klimaanlage von ihrem herkömmlichen Modus für den geschlossenen Innenraum auf den erfindungsgemäßen Betriebsmodus für den offenen Innenraum umschalten. Ein derartiger Sensor bzw. zusätzliche Sensoren kann/können neben dem Öffnungszustand eines Verdecks auch den Öffnungszustand eines Schiebedachs oder dergleichen Dachöffnung oder auch den Öffnungszustand eines Fensters detektieren. Die Umschaltung des Klimaanlagenbetriebs bzw. der Art und Weise der Ermittlung des Istwerts für die Innenraumtemperaturregelung ist in allen Fällen so, wie zuvor beschrieben. Zweckmäßig ist es, wenn der Wichtungsfaktor abhängig von der Art der Innenraumöffnung (komplettes Verdeck, Schiebedach oder Fenster) unterschiedlich gewählt wird, wenn zu erwarten ist, dass die klimatischen Verhältnisse im Innenraum des Fahrzeuges, je nachdem, welche Innenraumöffnung geöffnet ist, unterschiedlich sein könnten.

Die Erfindung wird nachfolgend anhand der Figuren, in denen schematisch in Seitenansicht ein Fahrzeug mit Klimaanlage dargestellt ist, beschrieben. Im einzelnen zeigen:

Fig. 1    in Seitenansicht ein Fahrzeug mit schematisch dargestellter Klimaanlage und

Fig. 2    ein Blockschaltbild der Hauptkomponenten des Regelungssystems der erfindungsgemäß betriebenen Klimaanlage.

In den Figuren ist die Klimaanlage anhand eines luftseitig gesteuerten Systems beschrieben. Die Erfindung ist auf derartige Klimaanlagen allerdings nicht beschränkt. Ebenso lässt sich die Erfindung bei einem Fahrzeug mit wasserseitig gesteuerter Klimaanlage realisieren.

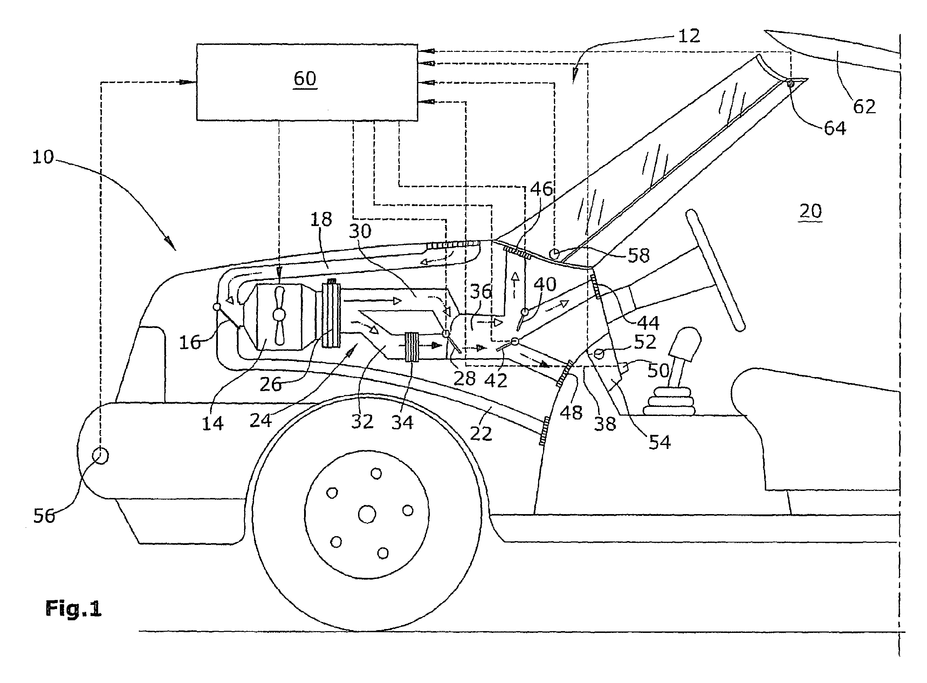

Gemäß Fig. 1 weist eine Klimaanlage 10 für ein Kraftfahrzeuge 12 ein Gebläse 14 auf, das in Abhängigkeit von der Stellung einer Frischluft-/Umluftklappe 16 Frischluft aus einem Frischiuft-Ansaugkanal 18 oder aus einem im Innenraum 20 endenden Umluftkanal 22 Luft ansaugt. In Strömungsrichtung betrachtet hinter dem Gebläse 14 befindet sich einen Lufttemperiervorrichtung 24 (in diesem Beispiel luftseitig gesteuert, wobei wasserseitig gesteuerte Temperiervorrichtungen ebenso einsetzbar sind) mit einem Kühlaggregat 26 zum Abkühlen der Ansaugluft. Die abgekühlte (und entfeuchtete) Luft durchströmt in Abhängigkeit von der Stellung einer Mischerklappe 28 der Lufttemperiervorrichtung 24 eine von zwei zueinander parallel geschalteten Kanälen 30,32. Einer dieser beiden Kanäle (im Ausführungsbeispiel der Kanal 32) weist ein Heizaggregat 34 zum Erwärmen der zuvor abgekühlten Luft auf. Hinter dem Wärmetauscher 34 sind die beiden Kanäle 30,32 in einer Mischkammer 36 wieder zusammengeführt. An die Mischkammer 36 schließt sich eine Luftverteilvorrichtung 38 an, die zwei Klappen 40,42 aufweist, um die Luft wahlweise über Mannanströmöffnungen 44, Defrosteröffnungen 46 und/oder Fußraumauströmöffnungen 48 in den Innenraum 20 einzulassen. Die zuvor genannten Elemente der Klimaanlage sind Bestandteil von deren Luftzuführsystem.

Die Steuerung der gesamten Klimaanlage 10 erfolgt grundsätzlich dergestalt, dass eine über eine solltemperatur-Einstellvorrichtung 50 vorgebbare Solltemperatur $T_{SOLL}$ für den Innenraum 20 erreicht und gehalten wird. Zu diesem Zweck weist die Klimaanlage 10 als Isttemperatur-Ermittlungsvorrichtung einen Temperaturfühler 52 auf, der den Istwert $T_{IST}$ der Innentemperatur misst und z.B. wie die Solltemperatur-Einstellvorrichtung 50 im Steuerungsgerät 54 untergebracht ist. Die Klimaanlage 10 weist ferner divers Sensoren wie z.B. einen Außentemperaturfühler 56 und einen Sonnensensor 58 auf, deren Signale einer zentralen Steuereinheit 60 zugeführt werden, die nach einem Regelalgorithmus Stellantriebe für u.a. das Gebläse 14 und die diversen Klappen des Luftzuführsystems ansteuert.

Das Kraftfahrzeug 12 ist in diesem Ausführungsbeispiel als Cabrio ausgebildet, dessen Verdeck 62 geöffnet und geschlossen werden kann. Mit 64 ist ein Sensor bezeichnet, der den Zustand (geöffnet oder geschlossen) des Verdecks 62 detektiert und an die zentrale Steuereinheit 60 meldet. Die zentrale Steuereinheit 60 steuert bzw. regelt die Klimaanlage in Abhängigkeit von dem Signal des Sensors 64 unterschiedlich, worauf weiter unten eingegangen wird. An dieser Stelle sei hervorgehoben, dass ein Cabrio-Fahrzeug nicht das einzige Beispiel für ein Fahrzeug ist, dessen Klimaanlage erfindungsgemäß betrieben werden kann. So kann man die Klimaanlage auch in Abhängigkeit des Öffnungs- bzw. Schließzustandes anderer in den Innenraum 20 hineinführender Öffnungen, wie beispielsweise eine Dachöffnung oder ein Fenster, erfindungsgemäß unterschiedlich betreiben.

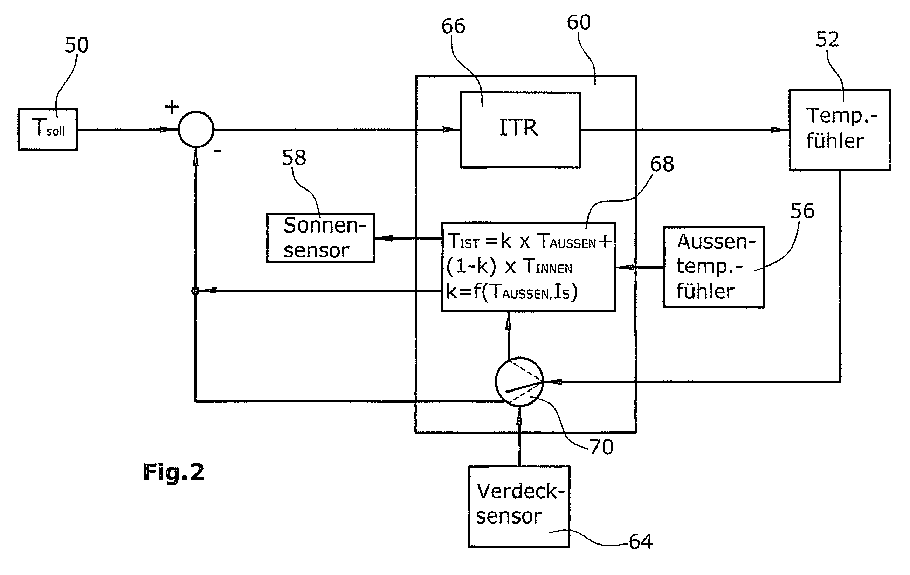

Fig. 2 zeigt eine andere Darstellung des Regeiungssystems der Klimaanlage 10 des Fahrzeuges 12 gemäß Fig. 1. Die Steuereinheit 60 umfasst eine Innenraumtemperatur-Regeleinrichtung 66, die das Differenzsignal zwischen der eingestellten Solltemperatur und wahlweise der mit Hilfe des Temperaturfühlers 52 gemessenen oder der aus dessen Messwert und dem Messwert der Außentemperatur ermittelten (Ist-)Temperatur empfängt. Die Innenraumtemperatur-Regeleinrichtung 66 beeinflusst unter anderem das Gebläse 14, die Lufttemperiervorrichtung 24 und die Klappen der Luftverteilvorrichtung 38.

Die Steuereinheit 60 umfasst ferner eine Istwerttemperatur-Ermittlungseinrichtung 68, die in Abhängigkeit von dem Zustand des Verdecks 62 (offen oder geschlossen) aktiv oder deaktiv ist. Diese Istwerttemperatur-Ermittlungseinrichtung 68 wird zugeschaltet, wenn das Verdeck 62 geöffnet ist. Beispielsweise schaltet in diesem Fall ein Schalter 70 das Ausgangssignal des Temperaturfühlers 52 für den Innenraum 20 auf die Isttemperatur-Ermittlungseinrichtung 68 auf.

In diese Ermittlungseinrichtung 68 geht ferner das Ausgangssignal des Außentemperaturfühlers 56 ein. Ferner ist die Ermittlungseinrichtung auch von dem Signal des Sonnensensors 58 gesteuert.

Die Rechenvorschrift, nach der im Falle des geöffneten Zustandes des Verdecks 64 der Istwert für die Innenraumtemperatur-Regeleinrichtung 66 ermittelt wird, ist in Fig. 2 angegeben. Die beiden Messwerte für die Außentemperatur und die Innenraumtemperatur werden gewichtet miteinander kombiniert. Die beiden Wichtungskoeffizienten ergeben in der Summe 1 bzw. 100 %. Je größer der eine Messwert gewichtet wird, um so geringer ist die in die Kombination eingehende Wichtung des anderen Messwertes. Der Wichtungsfaktor für den Messwert des Außentemperaturfühlers 56 ergibt sich dabei als Funktion der Außentemperatur und der Sonnenstrahlungsintensität.

Je höher die Außentemperatur ist, um so größer ist der Wichtungsfaktor für den Messwert des Außentemperaturfühlers 56, d.h. um so kleiner ist der Wichtungsfaktor für den Messwert des dem Innenraum 20 zugeordneten Temperaturfühlers 52. In Abhängigkeit von der Sonnenstrahlungsintensität steigt der Wichtungsfaktor des Messwerts für die Außentemperatur an. Bei gleicher Außentemperatur ist dieser Wichtungsfaktor um so größer, je stärker die Sonnenstrahlungsintensität ist.

Mit dem erfindungsgemäßen Konzept der Ermittlung eines Temperaturwertes, der als Istwert bei der Innenraumtemperaturregelung eingeht, wird auch bei geöffnetem Verdeck 62 das Konzept der Klimaregelung mit der Maßgabe "warme Füße und kalter Kopf" verfolgt. Dies geschieht, indem im Falle hoher Außentemperaturen der Messwert des dem Innenraum 20 zugeordneten Temperaturfühlers 52 wenig gewichtet in die Berechnung eingeht. Im Falle niedriger Außentemperaturen wird dem Messwert des Temperaturfühlers 52 für den Innenraum 20 eine größere Bedeutung für die Innenraumtemperaturregelung beigemessen, da eine zu starke Gewichtung der gemessenen Außentemperatur dazu führen könnte, dass die in den Fußraum einströmende Luft an den Füßen und Beinen der Fahrgäste als zu warm empfunden wird.

Die Erfindung wurde vorstehend anhand der Beeinflussung des Istwerts für die Innenraumtemperaturregelung beschrieben. Äquivalent hierzu ist es, wenn man anstelle des Istwerts den Sollwert für die Innenraumtemperaturregelung beeinflussen würde, wobei die Beeinflussung in diesem Fall mit gegenüber den obigen Betrachtungen umgekehrten Vorzeichen erfolgen müsste. Auch ist es denkbar, dass Differenzsignal aus vorgegebenem Sollwert und gemessenem Istwert in der erfindungsgemäßen Art und Weise zu beeinflussen. All diese Varianten sind zur Erfindung funktionsäquivalente Lösungsansätze.

**BEZUGSZEICHENLISTE**

| | |
|---|---|
| 10 | Klimaanlage |
| 12 | Kraftfahrzeug |
| 14 | Gebläse |
| 16 | Frischluft-/Umluftklappe |
| 18 | Frischluft-Ansaugkanal |
| 20 | Innenraum |
| 22 | Umluftkanal |
| 24 | Lufttemperiervorrichtung |
| 26 | Kühlaggregat |
| 28 | Mischerklappe |
| 30 | Kanälen |
| 32 | Kanälen |
| 34 | Heizaggregat |
| 36 | Mischkammer |
| 38 | Luftverteilvorrichtung |
| 40 | Klappen |
| 42 | Klappen |
| 44 | Mannanströmöffnungen |
| 46 | Defrosteröffnungen |
| 48 | Fußraumausströmöffnungen |
| 50 | Solltemperatur-Einstellvorrichtung |
| 52 | Temperaturfühler |
| 54 | Steuerungsgerät |
| 56 | Außentemperaturfühler |
| 58 | Sonnensensor |
| 60 | Steuereinheit |
| 62 | Verdeck |
| 64 | Verdecksensor |
| 66 | Innenraumtemperatur-Regeleinrichtung |
| 68 | Isttemperaturwert-Ermittlungseinrichtung |
| 70 | Umschalter |

**Patentansprüche**

1. Verfahren zur Ermittlung eines Temperaturwertes bei einem mit einer Klimaanlage (10) mit einem Außentemperaturfühler (56) und einem Temperaturfühler (52) für den Innenraum (20) ausgestatteten, als Cabrio ausgebildeten und/oder mit einem Schiebedach oder einer anderen verschließbaren Innenraumöffnung versehenen Fahrzeug (12) als Istwert für eine Innenraumtemperaturregelung der Klimaanlage (10) bei geöffnetem Verdeck (62) oder Schiebedach oder einer anderen Fahrzeuginnenraumöffnung, wobei bei dem Verfahren

    - der Messwert des Außentemperaturfühlers (56) und der Messwert des dem Innenraum (20) zugeordneten Temperaturfühlers (52) kombiniert werden, wobei

        - die Wichtung des Messwertes des Außentemperaturfühlers (56) um so stärker und die Wichtung des Messwertes des dem Innenraum (20) zugeordneten Temperaturfühlers (52) um so geringer ist, je höher die Außentemperatur ist, und
        - die Wichtung des Messwertes des Außentemperaturfühlers (52) um so geringer und die Wichtung des Messwertes des dem Innenraum (20) zugeordneten Temperaturfühlers (52) um so stärker ist, je niedriger die Außentemperatur ist.

2. Verfahren nach Anspruch 1, wobei das Fahrzeug (12) zusätzlich einen Sonnensensor (58) zur Ermittlung der Intensität der Sonnenstrahlung aufweist und das Verfahren **dadurch gekennzeichnet ist, dass** die Wichtung des Messwertes des Außentemperaturfühlers (56) gegenüber der Wichtung des Messwertes des dem Innenraum (20) zugeordneten Temperaturfühlers (52) bei gleicher Außentemperatur um so größer ist, je höher die ermittelte Sonnenstrahlungsintensität ist.

**Claims**

1. Method for determining a temperature value in a vehicle (12) which is equipped with an air condition system (10) having an outside temperature sensor (56) and a temperature sensor (52) for the interior (20) and which is designed as a convertible and/or a vehicle with a sliding roof or another closable opening of the interior, said value being determined as an actual value for the interior temperature control of the air condition system (10), when the top (62) or the sliding roof or other opening of the vehicle interior is open, wherein in the method

- the measured value of the outside temperature sensor (56) and the measured value of the temperature sensor (52) assigned to the interior (20) are combined, wherein

- the weight of the measured value of the outside temperature sensor (56) is the greater and the weight of the measured value of the temperature sensor (52) assigned to the interior (20) is the smaller, the higher the outside temperature is, and
- the weight of the measured value of the outside temperature sensor (56) is the lower and the weight of the measured value of the temperature sensor (52) assigned to the interior (20) is the greater, the lower the outside temperature is.

2. Method as defined in claim 1, wherein the vehicle (12) additionally comprises a sunlight sensor (58) for determining the intensity of the solar radiation, and the method being **characterized in that**, for constant outside temperatures, the weight of the measured value of the outside temperature sensor (56) is the larger with respect to the weight of the measured value of the temperature sensor (52) assigned to the interior (20), the higher the determined intensity of solar radiation is.

**Revendications**

1. Procédé de détermination d'une valeur de température d'une véhicule (12) munie d'un système de climatisation (10) ayant un capteur de température extérieure (56) et un capteur de température (52) pour l'habitacle (20), ladite véhicule étant réalisée comme cabriolet et/ou munie d'un toit ouvrant ou d'une autre ouverture fermable de l'habitacle, ladite valeur étant déterminée comme valeur réelle pour la commande de la température intérieure de la climatisation (10) quand la capote (62) ou le toit ouvrant ou une autre ouverture de l'habitacle de la voiture est ouverte, dans lequel procédé

- la valeur mesurée dudit capteur de température extérieure (56) et la valeur mesurée du capteur de température (52) associé à l'habitacle (20) sont combinées, dans lequel

- plus la température extérieure est élevée, plus le poids de la valeur mesurée du capteur de température extérieure (56) sera important et moins le poids de la valeur mesurée du capteur de température (52) associé à l'habitacle (20) sera important, et
- plus la température extérieure est basse, moins le poids de la valeur mesurée du capteur de température extérieure (56) sera important et plus le poids de la valeur mesurée du capteur de température (52) associé à l'habitacle (20) sera important.

2. Procédé selon la revendication 1, dans le quel la véhicule (12) en outre comprend un capteur de soleil (58) pour déterminer l'intensité de la radiation solaire, le procédé étant **caractérisé en ce qu'**en cas de températures extérieures constantes, plus l'intensité de la radiation solaire déterminée est haute, plus le poids de la valeur mesurée du capteur de température extérieure (56) sera important par rapport au poids de la valeur mesurée du capteur de température (52) associé à l'habitacle (20).

**Fig.1**

EP 1 790 508 B1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3843898 C1
- DE 4105143 C1
- DE 10235580 A1
- DE 10257587 B3
- DE 10342987 A1
- EP 0375871 B1
- EP 0857593 B1
- WO 2004052668 A1